Europäisches Patentamt

European Patent Office

Office européen des brevets

(19)

(11) Publication number: **0 044 596**

A1

# (12) EUROPEAN PATENT APPLICATION

(21) Application number: **81200800.1**

(22) Date of filing: **13.07.81**

(51) Int. Cl.³: **G 01 N 29/02**

(30) Priority: **18.07.80 SE 8005251**

(43) Date of publication of application:
**27.01.82 Bulletin 82/4**

(84) Designated Contracting States:
**AT BE CH DE FR GB IT LI LU NL**

(71) Applicant: **Institutet för vatten- och luftvardsforskning**
**Box 5207**
**S-402 24 Göteborg(SE)**

(72) Inventor: **Steen, Bengt**
**Anders Zornsgatan 24**
**S-412 72 Göteborg(SE)**

(72) Inventor: **Janson, Erik**
**Risäsgatan 10**
**S-413 07 Göteborg(SE)**

(74) Representative: **Roth, Michel et al,**
**GÖTEBORGS PATENTBYRA AB Box 5005**
**S-402 21 Göteborg(SE)**

(54) **Method and apparatus for determining the mass concentration of particles in a gaseous medium.**

(57) The invention relates to a means and an apparatus for the determination of the mass concentration of suspended particles in a gaseous medium. By generating and transmitting siniusoidal sound waves with one or more predetermined frequencies through a gaseous medium and, at a certain distance from the transmitter, receiving and converting the sound waves to electrical signals, the sound velocity change of the sound signal or signals is measured. By producing and processing this information, a direct measure of the aerosol concentration in the medium can be obtained. The arrangement according to the invention consists mainly of a measuring chamber (5), an electronic unit (2), a transmitter (3) and a receiver (4). The electronic unit (2) consists in its turn mainly of first and second frequency channels (7, 8), a phase measuring unit (6), a delay circuit (17) and a digital display arrangement (9).

FIG.1

Method and apparatus for determining the mass concentration of particles in a gaseous medium

The present invention relates to method and apparatus for measuring and determining the proportion of suspended particles in a gaseous medium.

## Background

In order to continuously determine the mass concentration of suspended particles in smoke gases and/or in air, reliable dust measuring instruments are necessary. The presently available instruments and samplers are, not sufficiently accurate and reliable for the measurement, over a long period of time, of dust concentration in'smoke gases or in the air, e.g. in processing industries. Polluting industries and processes are now often charged with the demand to build and operate cleaning plants whose functioning and effectivity are difficult to supervise with the measuring instruments known today.

Instruments for the mentioned measuring requirements are limited to mainly three measuring principles, namely $\beta$ - absorption instruments, light absorption instruments and light dispersion instruments. These measuring instruments are thus in use today for the measurement of particle concentrations in smoke gases, but are associated with a number of disadvantages.

$\beta$ -absorption instruments have proved to be the only instruments that, in actual practice, are useable for measuring mass concentrations. The instruments are however very expensive, and despite the fact that they have been on the market for a number of years they have not been used except for very special measurements.

Light absorption instruments are cheap and relatively reliable and have become the most commonly used instruments. They are, however, not very accurate and are comparatively insensitive.

The third group, the light dispersion instruments, need frequent calibration and are also sensitive to changes in the refractive index of the particles.

A number of instruments for the measuring of particles in a flowing medium have been patented. Such an apparatus is described for example in the British patent 1.410.954. The invention described therein relates to a method for detection of the particle size distribution of particles suspended in a flowing medium such as a fluid, and the device mainly detects the energy loss of a sound wave passing through the medium.

Purpose of the invention

The purpose of the present invention is to provide a method and an apparatus which makes it possible to perform instantaneous measuring of the proportion of suspended particles within a particle size range in a gaseous medium, and which does not suffer from the above mentioned disadvantages of the existing instruments. The apparatus has to be reliable and insensitive e.g. to changes in gas temperature and moisture level and be resistant to corrosive gases. Furthermore the apparatus according to the invention has to be accurate and inexpensive to manufacture. This is acheived according to the invention in that at least one sound wave with a specific frequency is brought to pass through the gaseous medium, whereby the velocity change of the sound wave, caused by the suspended particles, is detected and processed, a value of the suspended particles in the medium being displayed on a display device.

Description of the drawings

One embodiment of the invention will be described below with reference to the attached drawings.

Fig. 1 is a block diagram of an electronic unit according to the invention,

Fig. 2 shows a cross section through a measuring chamber,

Fig. 3 is a signal diagram,

Fig. 4 is a logical diagram of a phase measuring unit.

## Description of an embodiment

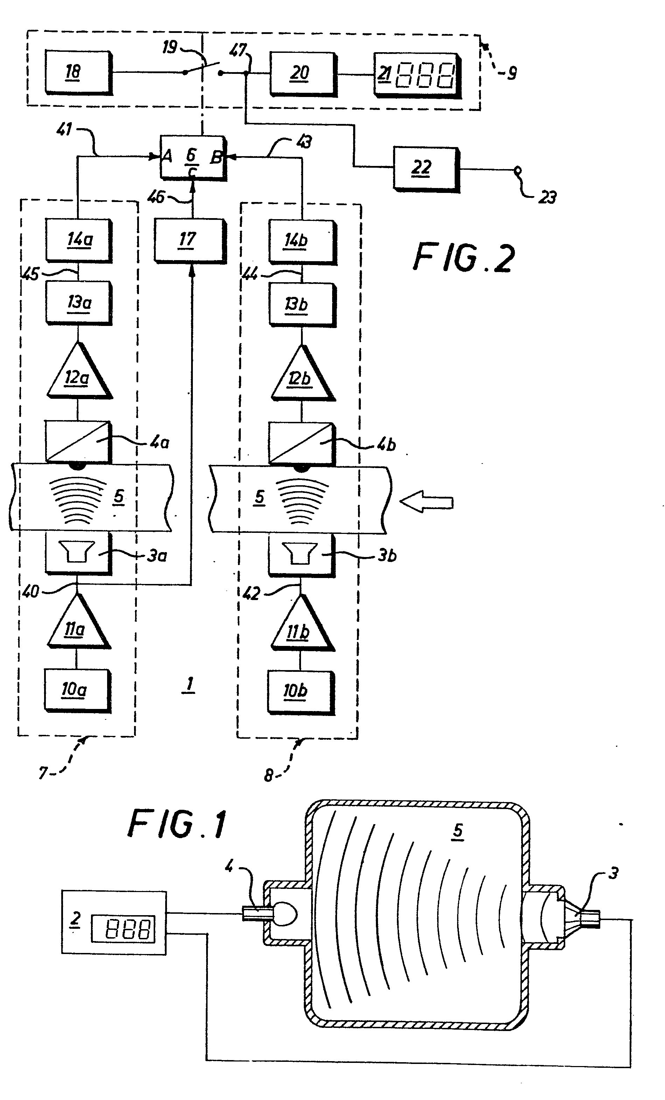

Fig. 1 shows the principal arrangement of an electronic unit 2, a transmitter 3, a receiver 4, and a measuring chamber 5. The measuring chamber 5 may for example consist of a sealed space for dust concentration measuring, e.g. in a laboratory, but may of course also be a part of a pipe or a conduit used for example for smoke gases. It is also possible to carry out measurements in a non-sealed space. The transmitter 3 preferably consists of one or more sound generators in some form, such as for instance an ultrasonic transducer, and the receiver 4 consists of at least one microphone unit sensitive to sound waves within the frequency range of the transmitter 3. Electrical signals that are supplied to the transmitter 3 are generated in the electronic unit 2, said electrical signals being converted by the transmitter 3 into sound signals (sound waves), which in their turn are detected by the receiver 4 and again converted into electrical signals. These are supplied to the electronic unit 2 for processing, recording and/or presentation.

## The measuring principle of the instrument

The particle detector 1 is based on a new measuring principle. It is known, per se, that the sound velocity in a gas containing suspended particles (C) is related to the velocity of sound in the pure gas (Co) according to the following expression:

$$\frac{Co}{C} = 1 + \sqrt{\frac{k}{\rho g} \cdot z},$$

where k = the mass concentration of the particles

$\rho$g = the density of the gas

$$z = 1 - \frac{w^2 \cdot \tau_d^2}{1 + w^2 \cdot \tau_d^2} + (\gamma - 1)\frac{Cpp}{Cpg} \cdot (1 - \frac{w^2 \cdot \tau_t^2}{1 + w^2 \cdot \tau_t^2})$$

where w = the angular velocity of the sound wave

$\tau_d$ = the dynamic relaxation time of the particle

$\gamma$ = the relation between the specific heat of the gas at constant pressure and at constant volume, respectively

$C_{pp}$ = the specific heat of the particle at constant pressure

$C_{pg}$ = the specific heat of the gas at constant pressure

$\tau_t$ = the thermal relaxation time of the particle =

$$= \frac{3 P_r C_{pp}}{2 \cdot C_{pg}} ,$$

where Pr is Prantls number (in gases, Pr = 0,70 - 0,73)

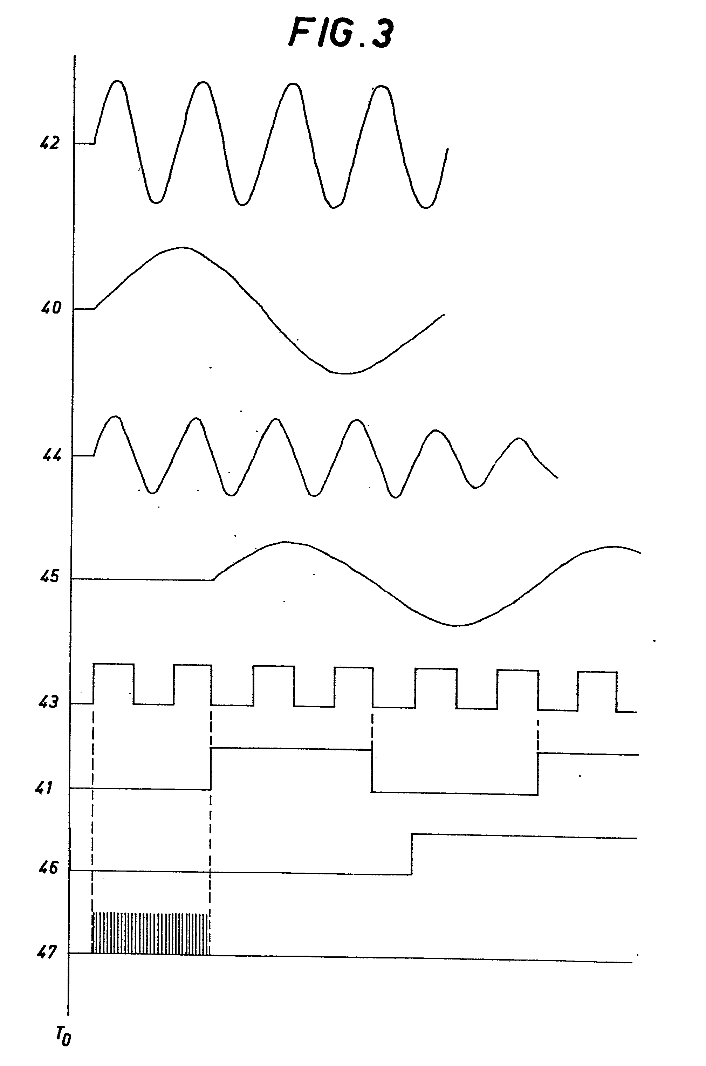

The transmitter 3 of the particle detector 1 preferably transmits sinusoidal sound signals with two separate frequencies and the difference in transmission time to the receiver 4 is measured. To improve the accuracy of the timing, the received sine signals are filtered and amplified so that a square wave is obtained (see signal diagram in fig. 3).

For small values of $\dfrac{kZ}{\int g}$ (which is always the case in this connection),

the expression

$$\sqrt{1 + k \frac{Z}{\int g}}$$

may also be written

$$1 + \frac{1}{2} k \frac{Z}{\int g}$$

thus obtaining

$$\frac{C_o}{C} = 1 + \frac{1}{2} k \frac{Z}{\int g}$$

If the distance between the loudspeaker and the microphone is $\ell$ and the time = t in dust-containing gas and $t_o$ in clean gas

we get: $\dfrac{\ell / t_o}{\ell / t} = \dfrac{t}{t_o} = \dfrac{t_o + \Delta t}{t_o} = 1 + \dfrac{\Delta t}{t} = 1 + \dfrac{1}{2} k \cdot \dfrac{Z}{\int g}$ , and

$$\Delta t = t_o \cdot \frac{1}{2} k \frac{Z}{\int g} \qquad \text{or} \qquad k = \frac{\Delta t \cdot \int g \cdot 2}{t_o \cdot Z}$$

$t_0$ is also relatively constant, but in the case of large changes in the gas composition or in the temperature, $t_0$ may be included in the calculations.

Z is a dimension-less number largely decided by the particle size and the frequency of measurement. Other quantities affect Z only to a small degree and remain relatively constant during the circumstances that are relevant here.

By varying the frequency one can discriminate certain particle sizes and thus measure the mass concentration within various particle size ranges.

Fig. 2 shows a block diagram of the electronic unit 2 of the particle detector 1. The most important components of the electronic unit are a phase measuring unit 6, a lower frequency channel 7, a higher frequency channel 8, and a display device 9. The first frequency channel 7, intended for a lower sound frequency, consists of a transmitter 3a, an oscillator 10a and a power amplifier 11a. The pulse train generated in the oscillator 10a is amplified by the power amplifier 11a and supplied to the transmitter 3a where the electrical signals 40 are converted into sinusoidal sound waves. These pass through the measuring chamber 5 and are detected by the receiver 4 and converted into an electrical signal. The signal is amplified in a microphone amplifier 12a, filtered in a band filter 13a, and is amplified and digitalized in a conversion circuit 14a. The signals 41 are thereafter supplied to the SLAV input A of the phase measuring unit 6.

In corresponding manner, an electric pulse train is generated in the oscillator 10b, but with a somewhat higher frequency, said pulse train being applied to and amplified by the power amplifier 11b, whereafter the signal 42 is converted and transmitted by the transmitter 3b. After passing through the measuring chamber 5 the sound signal is received by the receiver 4b where it is again converted into an electrical signal. The signal is amplified by the microphone amplifier 12b and applied to the band filter 13b, after which the signal is digitalized in the conversion circuit 14b. This signal 43 is then applied to the DOMINANT input B of the phase measuring unit.

A time delay circuit 17 is arranged to activate the phase measuring unit 6 after a certain delay, counted from the beginning of the transmission of sound signals. This permits the discrimination of unwanted echo effects, sound reflections and outside disturbances during the measuring. In the display device 9, a crystal-controlled clock pulse generator 18 generates a pulse train with a pre-determined frequency, said pulse train being supplied to a counting circuit 20 via an electronic swith 19. This takes place during the time intervals that the phase measuring unit 6 causes the switch 19 to be in the "closed" condition. The number of pulses that are supplied from the clock pulse generator 18 are accumulated in the counting circuit 20, and the information from the counting circuit 20 is supplied to a display 21, e.g. a digital display. The display 21 may for example consist of a liquid crystal display or any other similar display means. In case analog presentation is wanted, a digital/analog converter 22 is provided for converting the digital information into an electrical signal with analog information. To the outlet 23 of the digital-analog converter 22 there may be attached for example an external moving coil instrument or some type of printer or plotter.

The function with reference to the block diagram in fig. 2 may be described in short as follows. When two mechanical sound waves with different frequencies are propagated through the gaseous medium in the measuring chamber 5, there occurs a velocity change or a phase shift in the sound waves proportional to, i.a., the proportion of suspended particles in the medium. After a pre-determined time period, which is decided by the time delay circuit 17, the phase measuring unit 6 measures the time difference between the first zero passage of the first sound wave and the first zero passage of the second sound wave. Therefrom, a value for the velocity difference between the two sound waves with different frequencies is obtained. The time delay in the time delay circuit 17 decides the distance that the sound waves have travelled before the measuring occurs.

In this embodiment, the second frequency channel 8 may be considered as a reference channel whose purpose it is to compensate among other things for temperature variations in the medium. For this reason, this part of the system may be omitted, whereby the signal applied to the loudspeaker 3b is connected directly to the phase measuring unit 6 (not shown).

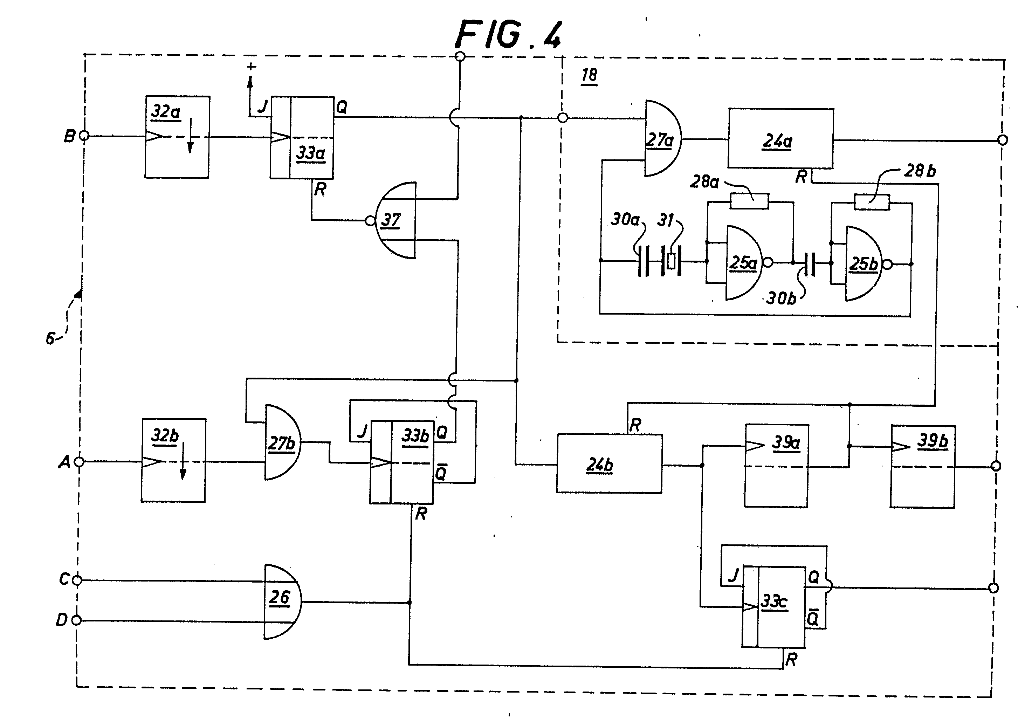

A substantial part of the electronic blocks shown in fig. 2 are in themselves previously known'and readily understandable to those skilled in the art, and they are therefore not described here in detail. There are, however, some exceptions, such as the phase measuring unit 6 which is not previously known. Fig. 4 shows the unit 6 in more detail.

A number of integrated circuits such as Schmitt-triggers, flip-flops and gates are the main components of the phase measuring unit 6. Fig. 4 also shows the clock pulse generator 18 which consists of a binary counter 24a, two NAND-gates 25a,b, an AND-gate 27a, two resistors 28a,b, two capacitors 30a,b and a crystal 31. To the DOMINANT input B of the phase measuring unit 6 there is connected the trigger input of a Schmitt-trigger 32a. The output of the Schmitt-trigger 32a is in its turn connected to the trigger input of a JK-flip-flop 33a the Q-output of which is connected to one input of the AND-gate 27a. The SLAVE inlet A of the phase measuring unit 6 is in its turn connected to the trigger input of yet another Schmitt-trigger 32b. The output of this is connected, via an AND-circuit 27b, to the trigger input of a JK-flip-flop 33b, the outlet of which is connected to a NOR-gate 37. The second input of the AND-gate 27b is connected to the Q-output of the JK-flip-flop 33a and simultaneously to the input of yet another binary counter 24b. The output of the binary counter 24b is electrically connected to the trigger input of a monostable flip-flop 39a which triggers on the negative flank, as well as to the trigger input of another JK-flip-flop 33c. The output of the monostable flip-flop 39a is connected, on the one hand to the reset inputs R of the binary counters 24a,b, and on the other hand to the trigger input of a further monostable flip-flop 39b, the output of which may be connected directly to the digital/analog converter 22. Also this monostable flip-flop 39b triggers on negative flank. An OR-gate 26 has one input connected to the delay input C of the phase measuring unit 6 and the second input of the OR-gate 26 is connected to the system reset input D of the phase measuring unit 6. The output of the OR-gate 26 is connected to the reset inputs R of the JK-flip-flops 33b,c, thereby providing an internal reset.

The function of the phase measuring unit 6 may in short be described as follows. When an electrical signal with a high enough potential is applied to the DOMINANT input B of the phase measuring unit, the Schmitt-trigger 32a emits a signal to the trigger input of the JK-flip-flop 32a. Due to the fact that the J-input of the flip-flop 33a is always connected to an electric current with a high potential, the Q-outlet emits a signal with a high potential which is applied to the AND-circuit 27a, the AND-circuit 27b and the binary counter 24b. A pulse train with a predetermined frequency is now allowed to pass from the oscillator circuit in the clock pulse generator 18 via the AND-circuit 27a to the binary counter 24a and from there to the counting circuit 20 and the digital/analog converter 22. As soon as an electrical signal with high enough potential is brought to the SLAVE input A of the phase measuring unit 6 the Schmitt-trigger 32b triggers, whereby a high output signal is given to one of the inputs of the AND-circuit 27b. Since, in this condition, there is a high signal on both inputs of the AND-circuit 27b, the AND-circuit gives a high output signal which triggers the JK-flip-flop 33b. Hereby the JK-flip-flop 33a is reset and the AND-circuit 27a is forced to interrupt the pulse train to the binary counter 24a. Since the counting circuit 20 transmits its information to the display device 21 all the time, it will be possible to obtain a value for the time lapse between the two sound waves transmitted through the chamber 5.

The invention is not limited to the above described embodiment, which is to be taken as an example only. A number of alternative embodiments are conceivable within the scope of the appended claims.

CLAIMS

1. A method for determining the mass concentration of suspended particles in a gaseous medium, c h a r a c t e r i z e d   i n that at least one sound wave with a predetermined frequency is brought to pass trough the gaseous medium, whereby the velocity change of the sound wave, caused by the suspended particles, is detected and processed, a value of the proportion of particles in the medium being displayed on a display device.

2. A method according to claim 1, c h a r a c t e r i z e d   i n that the phase shift of the sound wave or sound waves is detected by converting the sound wave or sound waves to electrical signals and by determining the interval of time between those instances when the amplitude of the signal assumes a certain value.

3. A method according to claim 1 or 2, c h a r a c t e r i z e d   i n that at least two sound waves with predetermined, separate frequencies are brought to pass through the gaseous medium, and that the mutual velocity change of the sound waves, after passing through the medium, is detected and processed, whereby a measurement of the proportion of suspended particles in the medium is obtained.

4. A method according to one or several of the preceding claims, c h a r a c t e r i z e d   i n that the reception of the sound wave or sound waves is carried out during limited time intervals sufficient for the propagation of transmitted sound waves through the medium, in order to eliminate sound disturbances.

5. A method according to one or several of the preceding claims,

c h a r a c t e r i z e d   i n
that the receiver contains a microphone, the membrane of which is supplied with an electrical signal which causes the membrane to vibrate to automatically remove contaminations from the membrane.

6. A method according to one or several of the preceding claims,
c h a r a c t e r i z e d   i n
that the substantially sinusoidal signals (44,45) are amplified and converted to square wave signals (43,41) to facilitate the determination of the phase shift.

7. A method according to one or several of the preceding claims,
c h a r a c t e r i z e d   i n
that the frequency of the sound wave or sound waves is adjustable for determining the mass concentration within various particle size ranges in the gaseous medium.

8. An apparatus for determining and displaying the mass concentration of the proportion of suspended particles in a gaseous medium, containing an electronic unit (2), a transmitter (3), a receiver (4) and a display unit (9),
c h a r a c t e r i z e d   i n
that the transmitter (3) is arranged in connection to the gaseous medium and adapted to emit at least one sound wave at a predetermined frequency, that the receiver (4) is adapted to detect and convert the emitted sound waves into electrical signals which are supplied to the electronic unit (2), and that the electronic unit (2) is adapted thereby to detect the velocity change in the sound wave or sound waves, the velocity change being proportional to the mass concentration of the particles in the medium.

9. An apparatus according to claim 8,
c h a r a c t e r i z e d    i n
that  a  phase  measuring  unit (6) is arranged to detect the
time  difference  between  at  least two signals applied to a
first and a second input (A an B respectively).

*FIG.2*

*FIG.1*

FIG.3

FIG.4

## European Patent Office

## EUROPEAN SEARCH REPORT

Application number

EP 81 20 0800

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| | <u>US - A - 3 802 271</u> (P.C. BERTELSON) * Column 6, line 64 - column 8, line 19; figure 1 * | 1-3,7-9 | G 01 N 29/02 |
| | <u>FR - A - 2 281 573</u> (THOMSON CSF) * Page 10, claim 1; figure 1 * | 1,2,6,9 | |
| A | <u>US - A - 3 906 361</u> (N. NESSLER) * Page 1 * | 1 | TECHNICAL FIELDS SEARCHED (Int. Cl.³) |
| A | ELEKTRONIK, vol. 25, no. 5, May 1976, pages 59-60 D. PRUSS: "Digitales Phasenmessgerät" * Pages 59,60 * | 1 | G 01 N 29/02 15/00 G 01 R 25/08 |

CATEGORY OF CITED DOCUMENTS

X: particularly relevant

A. technological background

O non-written disclosure

P: intermediate document

T: theory or principle underlying the invention

E. conflicting application

D document cited in the application

L citation for other reasons

& member of the same patent family corresponding document

The present search report has been drawn up for all claims

| Place of search | Date of completion of the search | Examiner |
|---|---|---|
| The Hague | 05-11-1981 | DUCHATELLIER |

EPO Form 1503.1  06.78